# EUROPÄISCHE PATENTSCHRIFT

(11) **EP 2 816 017 B1**
(45) Veröffentlichungstag und Bekanntmachung des Hinweises auf die Patenterteilung: **28.08.2019**
(21) Anmeldenummer: 13172882.6
(22) Anmeldetag: 19.06.2013
(51) Int. Cl.: C03B 33/095, A61J 1/06

(54) **Verfahren und Vorrichtung zum Erzeugen einer Sollbruchstelle an einer Brechampulle und dazugehörendes Produkt**
Method and apparatus for creating a predetermined fracture point on a breakable ampoule and associated product
Procédé et dispositif de génération d'un trait de rupture sur une ampoule à rompre et ampoule associée

(43) Veröffentlichungstag der Anmeldung: 24.12.2014
(73) Patentinhaber: AMBEG Dr. J. Dichter GmbH, 10829 Berlin (DE)
(72) Erfinder: Langer, Matthias, 12355 Berlin (DE)
(74) Vertreter: Grünecker Patent- und Rechtsanwälte PartG mbB

(56) Entgegenhaltungen:
- DE-A1- 3 537 434
- DE-A1-102010 035 673
- US-A- 4 898 605

## Beschreibung

Die vorliegende Erfindung betrifft ein Verfahren zum Erzeugen einer Sollbruchstelle an einer Brechampulle.

Des Weiteren betrifft die Erfindung eine Vorrichtung zur Durchführung eines Verfahrens zum Erzeugen einer Sollbruchstelle an einer Brechampulle.

Schließlich betrifft die Erfindung eine Brechampulle mit einer Sollbruchstelle.

Brechampullen sind Ampullen aus Glas, die meist eine zylindrische Form aufweisen, die an einer Stelle, dem sogenannten Ampullenhals, verengt ist. Der Bereich oberhalb des Halses wird als Ampullenspieß oder -kopf bezeichnet. Der darunterliegende Bereich wird als Ampullenkörper bezeichnet. Der Ampullenhals ist in der Regel oberhalb eines Flüssigkeitsspiegels einer in der Ampulle enthaltenen Arznei oder ähnlichem angeordnet. Zum Öffnen werden die Brechampullen im Bereich des Ampullenhalses aufgebrochen.

Der Ampullenhals kann mit einer im Wesentlichen ringförmigen Sollbruchstelle versehen sein. Diese Sollbruchstelle kann als ein Brechring ausgestaltet sein, deren Form eines Emaillerings umlaufend in den Ampullenhals eingebrannt ist und Spannungen im Glas erzeugt, die ein sauberes Abbrechen des Spießes ermöglichen sollen. Alternativ kann der Brechring in das Glas eingeritzt sein. Als eine weitere Möglichkeit können bei sogenannten One-Point-Cut-Ampullen (OPC-Ampullen) vorgeritzte Punkte oder Kerben am Ampullenhals angebracht sein. Der Ampullenspieß kann bei den OPC-Ampullen abgebrochen werden, indem beispielsweise mit dem Daumen gegen den markierten Punkt gedrückt wird. Beispielsweise ist in der DE3537434A1 ein Verfahren zur Herstellung einer Sollbruchstelleneinkerbung an einem Glaskörper beschrieben. Dazu wird Glasmaterial durch einen Laserstrahl abgedampft. Die US 4898605A befasst sich mit einer Ampulle, die eine Sollbruchstelle aufweist, an der das Glas durch Erwärmung vorgespannt wird. In der DE10120010035673A1 ist eine Vorrichtung zum Ablängen von Glasrohren gezeigt und ein entsprechendes Verfahren dazu beschrieben.

Verfahren und Vorrichtung zum Erzeugen von Sollbruchstellen an Brechampullen sind also aus dem Stand der Technik bekannt. Zur Erzeugung eines umlaufenden Risses kann zum Beispiel mit Hilfe einer Hartmetall- oder Diamantspitze die Oberfläche des Glases umlaufend angerissen werden oder es wird der schon erwähnte Emaillering eingebrannt. Bei den OPC-Ampullen wird lediglich einseitig am Ampullenhals eine Kerbe eingeritzt, deren Position beispielsweise durch ein Farbpunkt markiert wird.

Bei den vorgenannten Verfahren besteht der Nachteil, dass beim Abbrechen bzw. Abknicken des Ampullenspießes Glassplitter entstehen, welche in die geöffnete Ampullen hineinfallen und die darin enthaltene Flüssigkeit bzw. Arznei kontaminieren können.

Folglich liegt der vorliegenden Erfindung die Aufgabe zugrunde, ein Verfahren sowie eine Vorrichtung zum Erzeugen einer Sollbruchstelle an einer Brechampulle bereit zu stellen, die beim Abbrechen des Ampullenspießes keine Glassplitter entstehen lassen.

Beim eingangs genannten Verfahren wird diese Aufgabe dadurch gelöst, dass an einem zwischen einem abzubrechenden Ampullenspieß und einem Ampullenkörper angeordneten Ampullenhals der Brechampulle entlang einer Umfangslinie ein auf der Umfangslinie liegender Initialriss in die Oberfläche der Brechampulle eingebracht und durch Erwärmen eine Spannungszone zwischen dem Ampullenspieß und dem Ampullenkörper erzeugt und anschließend zumindest die Spannungszone abgekühlt wird, wodurch sich ein Trennriss in der Spannungszone ausbildet, wobei eine radiale Eindringtiefe der Spannungszone geringer als die Wandstärke der Brechampulle ist, wodurch der Trennriss eine entlang der Umfangslinie verlaufende Sollbruchstelle zum Abbrechen des Ampullenspießes bildet. Ein Trennriss mit genau definierter Risstiefe kann durch eine exakte thermische Spannungsinduktion erzeugt werden.

Bei der eingangs genannten Vorrichtung wird die Aufgabe dadurch gelöst, dass die Vorrichtung zur Durchführung des erfindungsgemäßen Verfahrens ausgebildet ist und eine schrittgeschaltete Transportkette zum Transport von wenigstens einer Brechampulle in einer Transportrichtung, eine Anrisseinrichtung zur Erzeugung eines Initialrisses in der Oberfläche der wenigstens einen Brechampulle, eine Erwärmungseinrichtung zur Erzeugung einer Spannungszone an der wenigstens einen Brechampulle und eine Kühleinrichtung zur Abkühlung der wenigstens einen Brechampulle aufweist, wobei die Transportkette Kugellager aufweist, die zur prismatischen Aufnahme der wenigsten einen Brechampulle ausgestaltet sind und eine Drehbewegung der Ampullen um ihre Längsachse herum mit einer Umfangsgeschwindigkeit zulassen.

Bei der eingangs genannten Brechampulle wird die Aufgabe dadurch gelöst, dass die Sollbruchstelle ein Trennriss ist, der entlang einer Umfangslinie an einem zwischen einem abzubrechenden Ampullenspieß und einem Ampullenkörper angeordneten Ampullenhals verläuft, und der aus einer thermischen Spannungszone gebildet ist, deren Eindringtiefe geringer als die Wandstärke der Brechampulle ist.

Die erfindungsgemäße Lösung hat den Vorteil, dass der Trennriss nur in einem äußersten Randbereich des Glases erzeugt wird und daher eine sehr saubere und kontrollierbare vollständige Abtrennung des Ampullenspießes vom Ampullenkörper ermöglicht. Zudem kann der Ampullenspieß nach dem Abkühlen in einem möglichst spannungsarmen bzw. spannungslosen Zustand abgebrochen werden. Da im erfindungsgemäßen Verfahren die thermischen Spannungen beim Abbrechen weitestgehend abgebaut sind, können Trennflächen und Kanten höherer Qualität erzeugt werden als Verfahren gemäß dem Stand der Technik ermöglichen. Die hohe Qualität der erfindungsgemäß sehr sauberen und ebenen Trennflächen und Kanten verhindert die Entstehung von Glassplittern und somit die Gefahr, dass diese beim Abbrechen des Ampullenspießes die Arznei im Ampullenkörper kontaminieren.

Die erfindungsgemäße Lösung kann durch die folgenden weiteren, jeweils für sich vorteilhaften Ausführungsformen beliebig ergänzt und weiter verbessert werden:
So kann gemäß einer ersten vorteilhaften Ausführungsform eines erfindungsgemäßen Verfahrens die entlang der Umfangslinie verlaufende Sollbruchstelle zum sauberen und präzisen Trennen des Ampullenspießes gebildet werden, indem eine vorbestimmte Eindringtiefe der Spannungszone geringer als 50 % der Wandstärke der Brechampulle ist. Vorteilhafterweise kann die Eindringtiefe der Spannungszone geringer als 30 % der Wandstärke sein. Insbesondere kann es von Vorteil sein, wenn die Eindringtiefe der Spannungszone ca. 20 % der Wandstärke beträgt.

Gemäß einer weiteren vorteilhaften Ausführungsform eines erfindungsgemäßen Verfahrens kann das Erwärmen mittels eines Lasers erfolgen, dessen Strahldurchmesser zumindest in einem Auftreffbereich des Lasers auf einer äußeren Oberfläche der Brechampulle weniger als 2 mm beträgt. Der Strahldurchmesser des Lasers kann vorteilhafterweise weniger als 1 mm betragen. Es ist insbesondere von Vorteil, wenn der Strahldurchmesser zumindest im Auftreffbereich ca. 0,5 mm beträgt. Somit kann möglichst gezielt eine Spannungszone mit vorbestimmter Eindringtiefe erzeugt werden, die geringer als die Wandstärke ist. Eine Ausdehnung der Spannungszone in Längsrichtung des Glasrohres kann bei einem möglichst geringen Strahldurchmesser des Lasers minimiert werden. Dies begünstigt die Ausbildung eines möglichst sauber entlang der Umfangslinie verlaufenden Trennrisses als Sollbruchstelle, die ein möglichst riss- und splitterfreies vollständiges Abtrennen des Ampullenspießes vom Ampullenkörper ermöglichen kann.

Zur möglichst präzisen Ausbildung der Spannungszone und des daraus resultierenden Trennrisses kann erfindungsgemäß vorgesehen sein, dass die Laserleistung für das Erwärmen weniger als 200 W oder weniger als 100 W beträgt.

Zum präzisen Erwärmen der Brechampulle entlang der Umfangslinie kann erfindungsgemäß vorgesehen sein, dass die Brechampulle beim Erwärmen zumindest im Bereich der Spannungszone mit einer Umfangsgeschwindigkeit von weniger als 1 m/s, weniger als 0,5 m/s, weniger als 0,2 m/s oder vorzugsweise mit einer Umfangsgeschwindigkeit von ca. 0,1 m/s um ihre Längsachse gedreht wird.

Gemäß einer weiteren vorteilhaften Ausführungsform eines erfindungsgemäßen Verfahrens kann vor dem Erwärmen ein auf der Umfangslinie liegender Initialriss in die Oberfläche der Brechampulle eingebracht werden. Der Trennriss kann sich vorteilhafterweise vom vorgegebenen Initialriss gezielt ausbilden. Der Initialriss kann zur Ausbildung eines besonders sauberen Trennrisses beitragen, indem eine entlang der Umfangslinie gemessene Länge des Initialrisses kürzer als 0,5 mm sein kann. Vorteilhafterweise kann die entlang der Umfangslinie gemessene Länge des Initialrisses kürzer als 0,1 mm sein. Beispielsweise kann hierfür mit einer Anrissspitze, zum Beispiel aus Diamant, kurzzeitig mit geringer Kraft gegen den Ampullenhals gedrückt werden, so dass der Initialriss durch eine Verletzung der Glasoberfläche ausgebildet wird.

Der Initialriss lässt sich gemäß einer weiteren vorteilhaften Ausführungsform des erfindungsgemäßen Verfahrens besonders präzise ausformen, wenn vorgesehen ist, dass der Initialriss durch ein radiales Eindrücken der Glasoberfläche mittels einer Anrissspitze gesetzt wird, die relativ zur Umfangsrichtung der Brechampulle bzw. des Ampullenhalses ortsfest verfahren wird. So kann beispielsweise vorgesehen sein, dass die Brechampulle beim Einbringen des Initialrisses nicht um ihre Längsachse gedreht wird, indem beispielsweise eine sie haltende Aufnahme, wie beispielsweise sie tragende Kugellager, bzw. ein sie aufnehmendes Spannfutter angehalten ist bzw. stillsteht.

Im Folgenden ist die Erfindung anhand mehrerer Ausführungsformen mit Bezug auf die beigefügten Zeichnungen beispielhaft näher erläutert. Die Ausführungsformen stellen lediglich mögliche Ausgestaltungen dar, bei denen einzelne Merkmale, wie oben beschrieben ist, unabhängig voneinander realisiert und weggelassen werden können. In der Beschreibung der Ausführungsformen sind der Einfachheit halber gleiche Merkmale und Elemente mit gleichen Bezugszeichen versehen.

Es zeigen:
- Fig. 1: eine schematische Seitenansicht einer erfindungsgemäß mit einem Trennriss als Soll-bruchstelle versehenen Brechampulle;
- Fig. 2: eine schematische Querschnittsansicht einer erfindungsgemäß mit einem Initialriss versehenen Brechampulle entlang einer Umfangslinie vor Ausbildung des Trennrisses;
- Fig. 3: eine schematische Querschnittsansicht der in Fig. 3 dargestellten Brechampulle nach Ausbildung des Trennrisses;
- Fig. 4: eine schematische Seitenansicht einer erfindungsgemäßen Vorrichtung zum Erzeugen einer Sollbruchstelle an einer Brechampulle; und
- Fig. 5: eine schematische Draufsicht der in Fig. 4 gezeigten Vorrichtung.

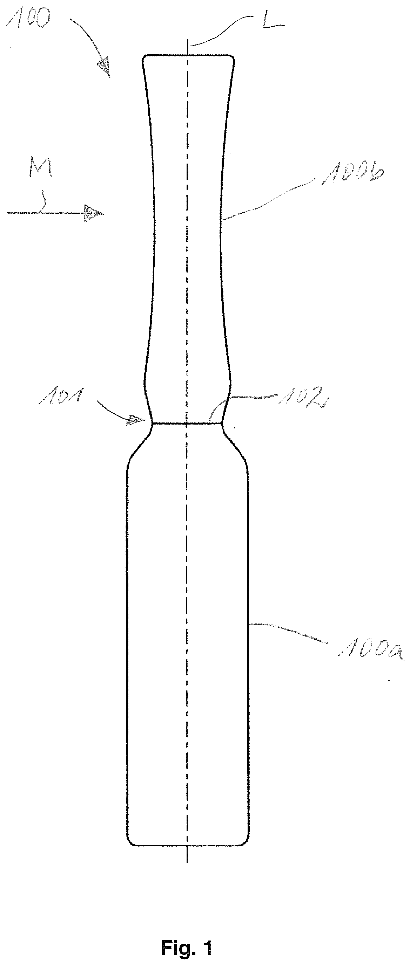

Zunächst ist eine erfindungsgemäße Brechampulle 100 anhand von Fig. 1 beschrieben, welche die Brechampulle in einer schematischen Seitenansicht zeigt. Die Brechampulle 100 besitzt einen Ampullenkörper 100a und einen Ampullenspieß bzw. -kopf 100b, zwischen denen ein Ampullenhals 101 angeordnet ist. Zwischen dem Ampullenkörper 100a und dem abzutrennenden Ampullenspieß 100b ist ein Trennriss 102 als umlaufende Sollbruchstelle am Ampullenhals 101 ausgebildet. Mittels einer beispielsweise senkrecht zur Längsachse L der Brechampulle 100 verlaufenden Brechkraft M kann ein Biegemoment in den eine Trenn- bzw. Sollbruchstelle vorgegebenen Trennriss 102 eingeleitet werden, so dass der Ampullenspieß 100b vom Ampullenkörper 100a abgebrochen wird. Diese Bruchkraft M wird typischerweise händisch beim Abbrechen des Ampullenspießes 100b unmittelbar vor dem Entnehmen des Arzneimittels erzeugt.

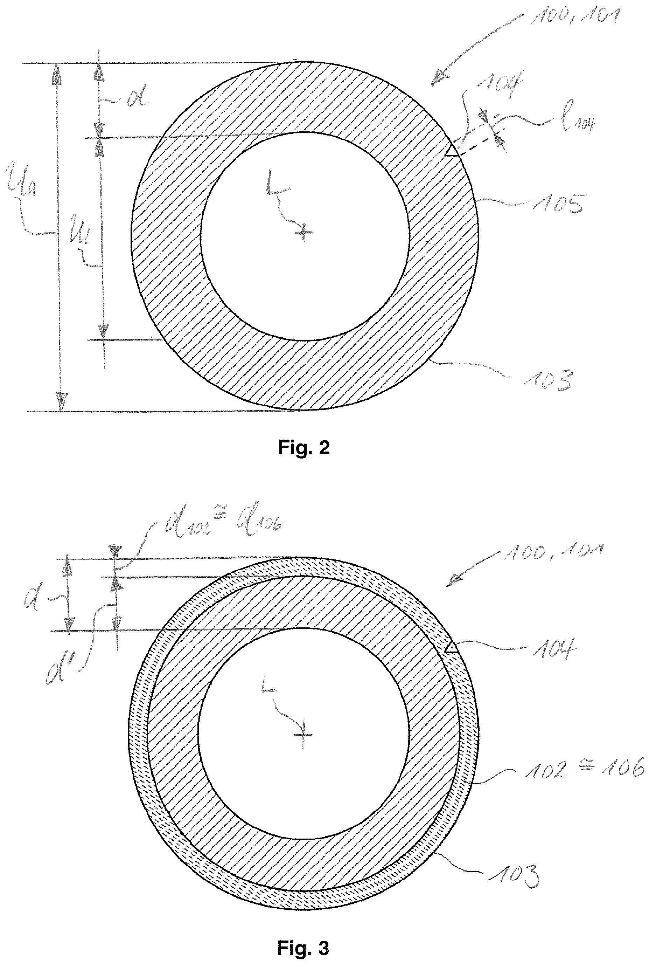

Fig. 2 zeigt die Brechampulle 100 in einer schematischen Querschnittsansicht in Höhe der Trennstelle 102 bzw. in Höhe einer zum Abbrechen des Ampullenspießes 100b vorgesehenen Umfangslinie 103, bevor der Trennriss 102 ausgebildet ist. Hier weist die Brechampulle 100 bzw. der Ampullenhals 101 einen Innendurchmesser Uᵢ, einen Außendurchmesser Uₐ und eine Wandstärke d auf. Des Weiteren ist in Fig. 2 ersichtlich, dass ein Initialriss 104 in einer Außen- bzw. Mantelfläche 105 der Brechampulle 100 eingebracht ist. Der Initialriss 104 hat eine Länge I₁₀₄, die tangential zur Umfangslinie 103 gemessen ist.

Fig. 3 zeigt die Brechampulle 100 in einem Zustand, in dem sich der Trennriss 102 in der Wandung der Brechampulle 100 ausgebildet hat. Der Trennriss 102 dringt mit einer radial gemessenen Trennrisstiefe d₁₀₂ in die Wandung der Brechampulle 100 ein. Von der Wandstärke d in Höhe der Umfangslinie 103 verbleibt eine Restwandstärke d' zum Abtrennen des Ampullenspießes 100b. Die Trennrisstiefe d₁₀₂ entspricht im Wesentlichen einer Tiefe d₁₀₆ einer zuvor erzeugten und durch schlagartiges Abkühlen aufgerissenen Spannungszone 106. Im vorliegenden Ausführungsbeispiel ist die Spannungszone 106 und folglich der Trennriss 102 so ausgebildet, dass die Tiefe d₁₀₂ des Trennrisses 102 ca. 20 % der Wandstärke d der Brechampulle 100 beträgt.

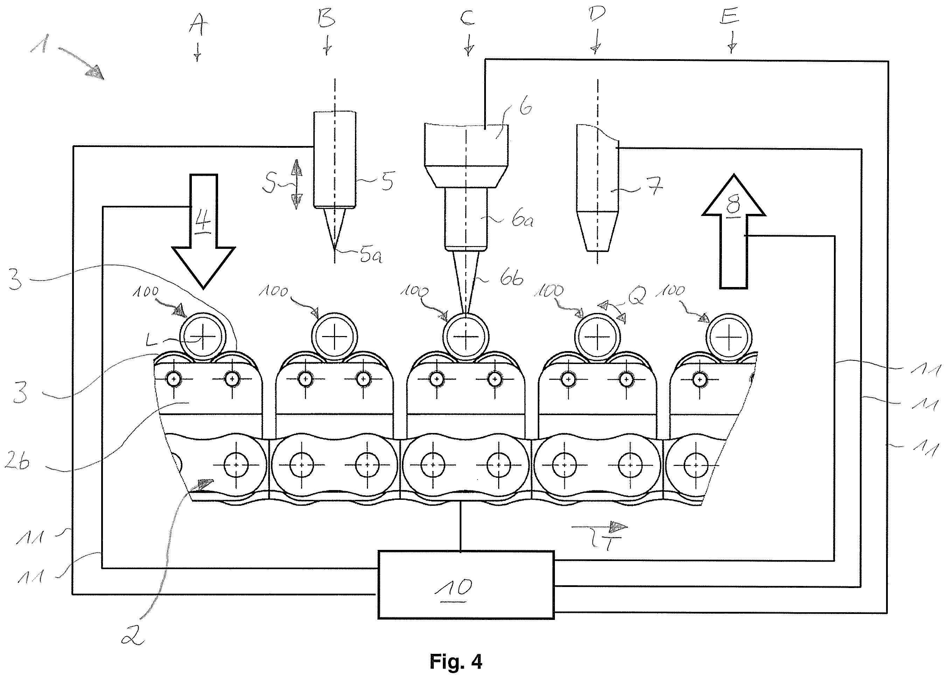

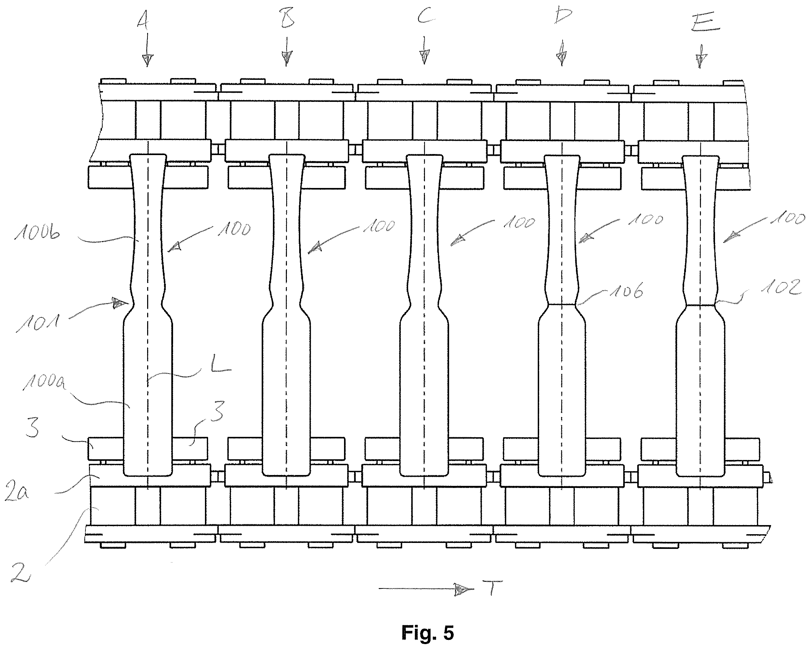

Figs. 4 und 5 zeigen eine erfindungsgemäße Vorrichtung 1 zur Erzeugung einer Sollbruchstelle an der Brechampulle 100 in einer schematischen Seitenansicht bzw. Draufsicht. Die Vorrichtung 1 umfasst eine schrittgeschaltete Transportkette 2, an deren nach oben in Richtung zu den Brechampullen 100 hin verlängerten Kettenlaschen 2b Kugellager 3 montiert sind. Die Kugellager 3 sind so angeordnet, dass sie einerseits einer prismatischen Aufnahme der Brechampullen 100 dienen und andererseits eine Drehbewegung der Ampullen 100 um ihre Längsachse L herum mit einer Umfangsgeschwindigkeit Q zulassen. Zur Erzeugung einer Sollbruchstelle durchlaufen die Brechampullen 100 in einer Transportrichtung T Schritt für Schritt folgende Arbeitsstationen A bis E:
In der ersten Arbeitsstation A kann eine Zuführeinrichtung 4, beispielsweise in Form eines mechanischen Greifers, eine Brechampulle 100 zuführen, die noch nicht mit einer erfindungsgemäßen Sollbruchstelle versehen ist. In anderen Worten wird an der ersten Arbeitsstation A die Vorrichtung 1 von der Zuführeinrichtung 4 mit Brechampullen 100 beschickt. Alternativ können die Brechampullen 100 per Hand auf die Transportkette 2 aufgelegt werden. Auch ist es möglich, dass es sich bei der in Fig. 1 gezeigten Transportkette 2 um einen Ausschnitt einer längeren Transportkette handelt, die beispielsweise in einer vollautomatischen Produktionslinie verwendet ist.

In der zweiten Arbeitsstation B kann eine Anrissvorrichtung 5 der Vorrichtung 1 den Initialriss 104 in der Oberfläche 105 der Brechampulle 100 setzen. Die Anrisseinrichtung 5 kann in einer Bewegungsrichtung S zur Umfangslinie 103 der Brechampulle 100 radial bzw. quer zur Transportrichtung T der Transportkette 2 beweglich ausgestaltet sein. Die Anrisseinrichtung 5 kann eine Anrissspitze 5a, zum Beispiel aus Diamant, umfassen, die mit kontrolliert geringer Kraft entlang der Bewegungsrichtung S gegen die Brechampulle 100 gedrückt und anschließend entlang der Bewegungsrichtung S von der Brechampulle weg bewegt wird, um den Initialriss 104 zu setzen.

Der dritten Arbeitsstation C kann eine Erwärmungseinrichtung 6 zugeordnet sein. Die Erwärmungseinrichtung 6 kann einen Laser umfassen, der eine Fokussiereinrichtung 6a in Form eines Fokuskopfes zum Fokussieren eines Laserstrahls 6b aufweisen kann. Beispielsweise kann die Erwärmungseinrichtung 6 in Form eines CO₂-Lasers mit einer Wellenlänge von ca. 10,6 µm ausgestaltet sein. Mit Hilfe der Erwärmungseinrichtung 6 kann eine Spannungszone an der Umfangslinie 103 der an der Arbeitsstation C auf den Kugellagern 3 rotierenden Brechampulle 100 eingebracht werden. Das Einbringen der Spannungszone kann durch Erwärmen nur einer äußeren Wandstärke der Brechampulle 100 auf eine Temperatur deutlich unterhalb der Transformationstemperatur des jeweiligen Glaswerkstoffes, aus dem die Brechampulle 100 hergestellt ist, hervorgerufen werden.

Durch eine Einwirktiefe der Spannungszone, die geringer als eine Gesamtwandstärke d der Brechampulle 100 ist, kommt es in der gemäß diesem Ausführungsbeispiel auf die dritte Arbeitsstation C folgenden Arbeitsstation D beim Abkühlen der Spannungszone nicht zu einem sofortigen Abtrennen des Ampullenspießes 100b. Da das eigentliche Abtrennen des Ampullenspießes 100b nach dem Abkühlen erst bei der späteren Verwendung der Brechampulle 100 erfolgt, kann ein erfindungsgemäßes Verfahren eine sehr gute Kantenqualität durch spannungsarme Trennung ermöglichen. In anderen Worten wird die hohe Kantenqualität durch eine Aufteilung der Schritte des Kühlens und Trennens erreicht.

Eine im Verhältnis zur Gesamtwandstärke der Brechampulle 100 nur geringe Eindringtiefe der Spannungszone wird in der vorliegenden Ausführungsform durch eine relativ kurze Einwirkzeit mit einem leicht defokussierten Laserstrahl 6b mit einem Strahldurchmesser von ca. 0,5 mm erreicht. Beim Bestrahlen wird mit einer relativ geringen Laserleistung von weniger als 100 W bei einer Umfangsgeschwindigkeit der Brechampulle 100 auf den Kugellagern 3 von 0,1 m/s eine Spannungszone erzeugt, die sich gemäß dem vorliegenden Ausführungsbeispiel bis zu einer Tiefe von ca. 20 % bis 80 % der Glasrohrwandstärke ausdehnt.

In der vierten Arbeitsstation D wird die Brechampulle 100 mittels einer Kühleinrichtung 7 möglichst schnell bzw. schlagartig abgekühlt. Die Kühleinrichtung 7 kann beispielsweise als Wassersprühdüse ausgestaltet sein, mit deren Hilfe die Spannungszone der auf den Kugellagern 3 um ihre Längsachse L rotierenden Brechampullen 100 abgekühlt wird. Beim Abkühlen entsteht ausgehend vom Initialriss, also einer Initialverletzung der Glasrohroberfläche, ein um die Umfangslinie 103 am Ampullenhals 101 der Brechampulle 100 herum verlaufender Trennriss im Bereich der Spannungszone, da sich das zuvor erwärmte und ausgedehnte Glasmaterial innerhalb kurzer Zeit an der Ampullenoberfläche zusammenzieht. Aufgrund der nur im äußeren Bereich der Wandstärke der Brechampulle 100 eingebrachten Spannungszone erfolgt die Ausdehnung des als Spannungsriss umlaufenden Trennrisses 102 ausgehend von den Zugspannungen an der Ampullenoberfläche ebenfalls nur bis eine Tiefe von ca. 20 % bis 80 % der Wandstärke d in diesem Ausführungsbeispiel.

Nach der Ausbildung des Trennrisses hat ein weiteres Abkühlen der Brechampulle 100 in der vierten Arbeitsstation D in der Regel keinen zusätzlichen Einfluss auf die Ausprägung des Risses, kann aber zum Ausgleichen von Temperaturunterschieden im Bereich des Trennrisses 102 und damit zum Abbau der Spannungszone genutzt werden.

In der fünften Station E kann die Brechampulle 100 automatisch durch eine Entnahmevorrichtung 8, wie beispielsweise einen Greifer, oder von Hand von der Transportkette 2 entnommen werden.

Des Weiteren verfügt die Vorrichtung 1 über eine Steuer- und/oder Antriebseinrichtung 10. Die Steuer- und/oder Antriebseinrichtung 10 kann eine Vielzahl von mechanischen, elektrischen, elektronischen, pneumatischen und/oder hydraulischen Antriebs- und Steuerorganen sowie - elementen beinhalten, um die Transportkette 2, die Kugellager 3 sowie die Zuführeinrichtung 4, die Anrisseinrichtung 5, die Erwärmungseinrichtung 6, die Kühleinrichtung 7 und die Entnahmeeinrichtung 8 zu steuern und anzutreiben. Die Steuer- und/oder Antriebseinrichtung 10 kann beispielsweise über mechanische, pneumatische, hydraulische, elektrische und/oder elektronische Steuer-, Mess- und/oder Versorgungsleitungen 11 mit der Transportkette 2, den Kugellagern 3 sowie der Zuführeinrichtung 4, der Anrisseinrichtung 5, der Erwärmungseinrichtung 6, der Kühleinrichtung 7 und der Entnahmeeinrichtung 8 verbunden sein. Die Steuer- und/oder Antriebseinrichtung 10 kann thermische, elektrische, mechanische, pneumatische und/oder hydraulische Energiequellen, Speicher- und/oder Steuerungselemente beinhalten, um die Vorrichtung 1 zu steuern, darin ablaufende Verfahrensschritte zu regeln und die Einrichtungen 2 bis 8 der Ablängvorrichtung 1 mit Energie und Hilfsstoffen, wie beispielsweise Wasser, zu versorgen.

Die Steuer- und/oder Antriebseinrichtung 10 kann eine beliebige Anzahl und Anordnung zusammenwirkender elektronischer Steuerungs- und Anzeigeelemente, wie Displays, Schalter, Knöpfe, Regler, Leuchtmittel, Prozessoren, Datenspeichereinrichtungen, Datenspeicherwechseleinrichtungen und elektronischer Schnittstellen beinhalten, um die Vorrichtung 1 zu einem erfindungsgemäßen Verfahren zu befähigen bzw. dazu abzustimmen.

Im Rahmen des Erfindungsgedankens sind Abweichungen von den oben beschriebenen Ausführungsbeispielen möglich:
So kann beispielsweise sowohl das Erwärmen als auch das Abkühlen an der dritten Arbeitsstation C vorgenommen werden. Dazu kann zum Beispiel die Erwärmungseinrichtung 6 und die Kühleinrichtung 7 an der dritten Arbeitsstation C angeordnet sein. Es kann eine den jeweiligen Anforderungen entsprechende Anzahl von Zuführeinrichtungen 4, Anrisseinrichtungen 5, Erwärmungseinrichtungen 6, Kühleinrichtungen 7 und Entnahmeeinrichtungen 8 an den Arbeitsstationen A bis E angeordnet sein, um ein möglichst prozessstabiles Erzeugen von Sollbruchstellen an Brechampullen 100 unter möglichst geringen Taktzeiten durchzuführen.

Es ist nicht zwingend erforderlich, dass die Vorrichtung 1 eine Transportkette 2 umfasst, um die Brechampulle 100 in den Arbeitsstationen A bis E zu positionieren. Es ist beispielsweise auch denkbar, die Ampulle 100 in einem Rundschalttisch die entsprechenden Arbeitsstationen A bis E durchlaufen zu lassen.

Die Tiefe d₁₀₆ der Spannungszone 106 bzw. des Trennrisses d₁₀₂ kann den jeweiligen physikalischen Eigenschaften des zu trennenden Glaswerkstoffes und den Abmaßen Uₐ, Uᵢ und d der Brechampulle 100 entsprechend gewählt werden, um ein zufriedenstellendes Erzeugen der Sollbruchstelle zum sauberen Abtrennen bzw. Abbrechen des Ampullenspießes 100b zu gewährleisten.

## Patentansprüche

1. Verfahren zum Erzeugen einer Sollbruchstelle an einer Brechampulle (100), **dadurch gekennzeichnet, dass** an einem zwischen einem abzubrechenden Ampullenspieß (100b) und einem Ampullenkörper (100a) angeordneten Ampullenhals (101) entlang einer Umfangslinie (103) ein auf der Umfangslinie (103) liegender Initialriss (104) in die Oberfläche (105) der Brechampulle (100) eingebracht und durch Erwärmen eine Spannungszone (106) zwischen dem Ampullenspieß (100b) und dem Ampullenkörper (100a) erzeugt und anschließend zumindest die Spannungszone (106) abgekühlt wird, wodurch sich ein Trennriss (102) in der Spannungszone (106) ausbildet, wobei eine radiale Eindringtiefe (d₁₀₆) der Spannungszone (106) geringer als die Wandstärke (d) der Brechampulle (100) ist, wodurch der Trennriss (102) eine entlang der Umfangslinie (103) verlaufende Sollbruchstelle zum Abbrechen des Ampullenspießes (100b) bildet.

2. Verfahren nach Anspruch 1, **dadurch gekennzeichnet, dass** die Eindringtiefe (d₁₀₆) der Spannungszone (106) geringer als 50% der Wandstärke (d) ist.

3. Verfahren nach einem der Ansprüche 1 oder 2, **dadurch gekennzeichnet, dass** die Eindringtiefe (d₁₀₆) der Spannungszone (106) ca. 20% der Wandstärke (d) beträgt.

4. Verfahren nach einem der Ansprüche 1 bis 3, **dadurch gekennzeichnet, dass** das Erwärmen mittels eines Laserstrahls (6b) erfolgt, dessen Strahldurchmesser zumindest in einem Auftreffbereich des Laserstrahls (6b) auf einer äußeren Oberfläche (105) der Brechampulle (100) weniger als 2 mm beträgt.

5. Verfahren nach Anspruch 4, **dadurch gekennzeichnet, dass** der Strahldurchmesser zumindest im Auftreffbereich ca. 0,5 mm beträgt.

6. Verfahren nach einem der Ansprüche 4 oder 5, **dadurch gekennzeichnet, dass** die Laserleistung für das Erwärmen weniger als 200 W beträgt.

7. Verfahren nach einem der Ansprüche 1 bis 6, **dadurch gekennzeichnet, dass** die Brechampulle (100) beim Erwärmen zumindest im Bereich der Spannungszone (106) mit einer Umfangsgeschwindigkeit von weniger als 1 m/s um ihre Längsachse (L) gedreht wird.

8. Verfahren nach einem der Ansprüche 1 bis 7, **dadurch gekennzeichnet, dass** die Brechampulle (100) beim Erwärmen zumindest im Bereich der Spannungszone (106) mit einer Umfangsgeschwindigkeit von ca. 0,1 m/s um ihre Längsachse (L) gedreht wird.

9. Verfahren nach einem der Ansprüche 1 bis 8, **dadurch gekennzeichnet, dass** eine entlang der Umfangslinie (103) gemessene Länge (I₁₀₄) des Initialrisses (104) kürzer als 0,5 mm ist.

10. Verfahren nach einem der Ansprüche 1 bis 9, **dadurch gekennzeichnet, dass** der Initialriss (104) durch ein radiales Eindrücken der Glasrohroberfläche (105) mittels einer Anrissspitze (5a) gesetzt wird, die relativ zu einer Umfangsrichtung der Brechampulle (100) ortsfest verfahren wird.

11. Verfahren nach einem der Ansprüche 1 bis 10, **dadurch gekennzeichnet, dass** die Brechampulle (100) beim Einbringen des Initialrisses (104) nicht um ihre Längsachse (L) gedreht wird.

12. Vorrichtung (1) zum Erzeugen einer Sollbruchstelle an einer Brechampulle (100), **dadurch gekennzeichnet, dass** die Vorrichtung (1) zur Durchführung eines Verfahrens gemäß wenigstens einem der Ansprüche 1 bis 11 ausgebildet ist und eine schrittgeschaltete Transportkette (2) zum Transport von wenigstens einer Brechampulle (100) in einer Transportrichtung (T), eine Anrisseinrichtung (5) zur Erzeugung eines Initialrisses (104) in der Oberfläche (105) der wenigstens einen Brechampulle (100), eine Erwärmungseinrichtung (6) zur Erzeugung einer Spannungszone (106) an der wenigstens einen Brechampulle (100) und eine Kühleinrichtung (7) zur Abkühlung der wenigstens einen Brechampulle (100), aufweist, wobei die Transportkette (2) Kugellager (3) aufweist, die zur prismatischen Aufnahme der wenigstens einen Brechampulle (100) ausgestaltet sind und eine Drehbewegung der Ampullen (100) im ihre Längsachse (L) herum mit einer Umfangsgeschwindigkeit (Q) zulassen.

13. Brechampulle (100) mit einer Sollbruchstelle, **dadurch gekennzeichnet, dass** die Sollbruchstelle ein Trennriss (102) ist, der entlang einer Umfangslinie (103) an einem zwischen einem abzubrechenden Ampullenspieß (100b) und einem Ampullenkörper (100a) angeordneten Ampullenhals (101) verläuft, und der aus einer thermischen Spannungszone (106) gebildet ist, deren Eindringtiefe (d₁₀₆) geringer als die Wandstärke (d) der Brechampulle (100) ist.

## Claims

1. Method for producing a target breaking point on a breakable ampoule (100), **characterised in that,** along a peripheral line (103) on an ampoule neck (101) disposed between an ampoule spike (100b) to be broken off and an ampoule body (100a), an initial crack (104) on the peripheral line (103) is introduced into the surface (105) of the breakable ampoule (100), and a stress zone (106) between the ampoule spike (100b) and ampoule body (100a) is produced by heating and at least the stress zone (106) is subsequently cooled, as a result of which a separation crack (102) is formed in the stress zone (106), wherein a radial penetration depth (d₁₀₆) of the stress zone (106) is less than the wall thickness (d) of the breakable ampoule (100), as a result of which the separation crack (102) forms a target breaking point for breaking off the ampoule spike (100b) which extends along the peripheral line (103).

2. Method according to Claim 1, **characterised in that** the penetration depth (d₁₀₆) of the stress zone (106) is less than 50% of the wall thickness (d).

3. Method according to any one of Claims 1 or 2, **characterised in that** the penetration depth (d₁₀₆) of the stress zone (106) is approx. 20% of the wall thickness (d).

4. Method according to any one of Claims 1 to 3, **characterised in that** heating takes place by means of a laser beam (6b), the beam diameter of which, at least in an impingement region of the laser beam (6b) on an external surface (105) of the breakable ampoule (100), is less than 2 mm.

5. Method according to Claim 4, **characterised in that,** at least in the impingement region, the beam diameter is approx. 0.5 mm.

6. Method according to any one of Claims 4 or 5, **characterised in that** the laser output for heating is less than 200 W.

7. Method according to any one of Claims 1 to 6, **characterised in that,** at least in the area of the stress zone (106), the breakable ampoule (100) is rotated about its longitudinal axis (L) with a circumferential speed of less than 1 m/s during heating.

8. Method according to any one of Claims 1 to 7, **characterised in that,** at least in the area of the stress zone (106), the breakable ampoule (100) is rotated about its longitudinal axis (L) with a circumferential speed of approx. 0.1 m/s during heating.

9. Method according to any one of Claims 1 to 8, **characterised in that** a length (I₁₀₄) of the initial crack (104) measured along the peripheral line (103) is less than 0.5 mm.

10. Method according to any one of Claims 1 to 9, **characterised in that** the initial crack (104) is set by radially pressing in the glass tube surface (105) with the aid of a scoring tip (5a) that is moved in a manner that is stationary with respect to a peripheral direction of the breakable ampoule (100).

11. Method according to any one of Claims 1 to 10, **characterised in that** the breakable ampoule (100) is not rotated about its longitudinal axis (L) when the initial crack (104) is introduced.

12. Apparatus (1) for producing a target breaking point on a breakable ampoule (100), **characterised in that** the apparatus (1) is configured to carry out a method according to at least one of Claims 1 to 11 and has a step-switched transport chain (2) for transporting at least one breakable ampoule (100) in a transport direction (T), a scoring device (5) for producing an initial crack (104) in the surface (105) of the at least one breakable ampoule (100), a heating device (6) for producing a stress zone (106) on the at least one breakable ampoule (100) and a cooling device (7) for cooling the at least one breakable ampoule (100), wherein the transport chain (2) has ball bearings (3) which are designed to receive the at least one breakable ampoule (100) in a prismatic manner and allow a rotational movement of the ampoules (100) about their longitudinal axis (L) with a circumferential speed (Q).

13. Breakable ampoule (100) having a target breaking point, **characterised in that** the target breaking point is a separation crack (102) which extends along a peripheral line (103) on an ampoule neck (101) disposed between an ampoule spike (100b) to be broken off and an ampoule body (100a) and which is formed by a thermal stress zone (106), the penetration depth (d₁₀₆) of which is less than the wall thickness (d) of the breakable ampoule (100).

## Revendications

1. Procédé de génération d'un emplacement de rupture sur une ampoule à rompre (100), **caractérisé en ce qu'**au niveau d'un col d'ampoule (101) agencé entre une pointe d'ampoule (100b) et un corps d'ampoule (100a), le long d'une ligne circonférentielle (103), une fissure initiale (104) située sur la ligne circonférentielle (103) est réalisée dans la surface (105) de l'ampoule à rompre (100) et générée en chauffant une zone de contrainte (106) située entre la pointe d'ampoule (100b) et le corps d'ampoule (100a), puis au moins la zone de contrainte (106) est refroidie, de manière à former une fissure de séparation (102) dans la zone de contrainte (106), dans lequel une profondeur de pénétration radiale (d₁₀₆) de la zone de contrainte (106) est inférieure à l'épaisseur de paroi (d) de l'ampoule à rompre (100), de sorte que la fissure de séparation (102) forme un emplacement de rupture pour rompre la pointe d'ampoule (100b) le long de la ligne circonférentielle (103).

2. Procédé selon la revendication 1, **caractérisé en ce que** la profondeur de pénétration (d₁₀₆) de la zone de contrainte (106) est inférieure à 50 % de l'épaisseur de paroi (d).

3. Procédé selon l'une des revendications 1 ou 2, **caractérisé en ce que** la profondeur de pénétration (d₁₀₆) de la zone de contrainte (106) représente environ 20 % de l'épaisseur de paroi (d).

4. Procédé selon l'une des revendications 1 à 3, **caractérisé en ce que** le chauffage est effectué au moyen d'un faisceau laser (6b), le diamètre de faisceau étant inférieur de 2 mm au moins dans une région d'impact du faisceau laser (6b) sur une surface extérieure (105) de l'ampoule à rompre (100).

5. Procédé selon la revendication 4, **caractérisé en ce que** le diamètre de faisceau est au moins égal à 0,5 mm dans la région d'impact.

6. Procédé selon l'une des revendications 4 ou 5, **caractérisé en ce que** la puissance laser de chauffage est inférieure à 200 W.

7. Procédé selon l'une des revendications 1 à 6, **caractérisé en ce que** l'ampoule à rompre (100) est entraînée en rotation autour de son axe longitudinal (L) pendant le chauffage au moins dans la région de la zone de contrainte (106) à une vitesse périphérique inférieure à 1 m/s.

8. Procédé selon l'une des revendications 1 à 7, **caractérisé en ce que** l'ampoule à rompre (100) est entraînée en rotation autour de son axe longitudinal (L) pendant le chauffage au moins dans la région de la zone de contrainte (106) à une vitesse périphérique d'environ 0,1 m/s.

9. Procédé selon l'une des revendications 1 à 8, **caractérisé en ce qu'une** longueur mesurée (I₁₀₄) le long de la ligne circonférentielle (103) de la fissure initiale (104) est inférieure à 0,5 mm.

10. Procédé selon l'une des revendications 1 à 9, **caractérisé en ce que** la fissure initiale (104) est formée par des empreintes radiales de la surface de tube de verre (105) au moyen d'un pointe dure à briser (5a), qui est déplacée de manière stationnaire par rapport à une direction circonférentielle de l'ampoule à rompre (100).

11. Procédé selon l'une des revendications 1 à 10, **caractérisé en ce que** l'ampoule à rompre (100), lors de la réalisation de la fissure initiale (104), n'est pas entraînée en rotation autour de son axe longitudinal (L).

12. Dispositif (1) pour générer un emplacement de rupture prédéterminé sur une ampoule à rompre (100), **caractérisé en ce que** le dispositif (1) est conçu pour exécuter un procédé selon au moins l'une des revendications 1 à 11 et présente une chaîne de transport à commutation par étapes (2) pour transporter au moins une ampoule à rompre (100) dans une direction de transport (T), un dispositif de fissuration (5) pour générer une fissure initiale (104) dans la surface (105) de la au moins une ampoule à rompre (100), un dispositif de chauffage (6) pour générer une zone de contrainte (106) au niveau de la au moins une ampoule à rompre (100) et un dispositif de refroidissement (7) pour refroidir la au moins une ampoule à rompre (100), dans laquelle la chaîne de transport (2) présente des roulements à billes (3) conçus pour la réception prismatique de la au moins une ampoule à rompre (100) et permettant un mouvement de rotation des ampoules (100) dans et autour de leur axe longitudinal (L) à une vitesse périphérique (Q).

13. Ampoule à rompre (100) ayant un emplacement de rupture prédéterminé, **caractérisée en ce que** l'emplacement de rupture prédéterminé est une fissure de séparation (102) s'étendant le long d'une ligne circonférentielle (103) sur un col d'ampoule (101) agencé entre une pointe d'ampoule à rompre (100b) et un corps d'ampoule (100a), et formée d'une zone de contrainte thermique (106) dont la profondeur de pénétration (d₁₀₆) est inférieure à l'épaisseur de paroi (d) de l'ampoule à rompre (100).
